# EUROPEAN PATENT APPLICATION

(11) **EP 4 181 381 A1**
(43) Date of publication of application: **17.05.2023**
(21) Application number: 20947132.5
(22) Date of filing: 31.07.2020
(51) Int. Cl.: H02M 5/22, H02M 5/10

(54) **SOLID-STATE TRANSFORMER AND POWER SUPPLY SYSTEM**

(71) Applicant: Huawei Digital Power Technologies Co., Ltd., Shenzhen, Guangdong 518043 (CN)
(72) Inventor: JIANG, Zhengdong, Shenzhen, Guangdong 518129 (CN); SHUAI, Peng, Shenzhen, Guangdong 518129 (CN); HUANG, Zhuyong, Shenzhen, Guangdong 518129 (CN)
(74) Representative: Isarpatent
(86) International application number: PCT/CN2020/106261
(87) International publication number: WO 2022/021347

(57) **Abstract**

A solid-state transformer (10) that maintains output voltage continuity during maintenance is provided. The solid-state transformer includes an input end (101), a plurality of power units (U1 to UM), and an output end (102). The input end is configured to input first three-phase alternating-current electrical power. The plurality of power units are connected in parallel to the input end and the output end, and each power unit is configured to convert the first three-phase alternating-current electrical power into first direct-current electrical power, and output the first direct-current electrical power from the output end. A power supply system (100) including the foregoing solid-state transformer is further included.

## Description

### TECHNICAL FIELD

This application relates to the electrical power field, and in particular, to a solid-state transformer and a power supply system.

### BACKGROUND

A solid-state transformer (Solid state transformer, SST), as a highly efficient alternating-current (AC) to direct-current (DC) conversion device or a highly efficient direct-current to alternating-current conversion device in the power supply field, can implement high-frequency electric energy conversion by using a switch switching technology and an electromagnetic induction principle. Currently, the solid-state transformer uses a power conversion module in the same city to convert alternating-current electrical power into direct-current electrical power. In this case, if a switch component in the power conversion module is damaged and becomes ineffective, overall power-off needs to be performed on the solid-state transformer for maintenance, and power supply continuity of the solid-state transformer cannot be maintained in a maintenance process. In addition, to meet a requirement for gradually increasing an output power of the solid-state transformer, the switch component in the power conversion module needs to be gradually developed in a high-voltage withstand direction. Because of relatively high costs of the switch component with high voltage withstand performance, overall costs of the solid-state transformer are also relatively high.

### SUMMARY

Embodiments of this application provide a solid-state transformer and a power supply system with relatively good power supply continuity and relatively low costs.

According to a first aspect, in an implementation of this application, a solid-state transformer is provided, including an input end, a plurality of power units, and an output end. The input end is configured to input first three-phase alternating-current electrical power. The plurality of power units are connected in parallel to the input end and the output end. Each power unit is configured to: convert the first three-phase alternating-current electrical power into a first direct-current electrical power, and output the first direct-current electrical power from the output end.

Because the plurality of power units are connected in parallel, if any one of the plurality of power units is damaged and needs to be repaired, the damaged power unit is directly repaired or replaced in a power-off manner, and another power unit that is not damaged to become ineffective can still operate normally. In other words, it can be still ensured that the output end of the solid-state transformer normally outputs the first direct-current electrical power to a load of the plurality of power units, to ensure that the load is not powered off and in a normally operating state in a maintenance process, thereby effectively improving running continuity and running stability of the load.

In an embodiment, the first three-phase alternating-current electrical power includes three phases of alternating-current electrical power with a phase difference of 120°. Each power unit includes three power modules. One power module is electrically connected between one phase of alternating-current electrical power and the output end. The power module is separately configured to convert the received alternating-current electrical power into the first direct-current electrical power. The three power modules can accurately perform direct-current conversion for the three-phase alternating-current electrical power, to ensure relatively high conversion efficiency.

Specifically, the three phases of alternating-current electrical power with the phase difference of 120° are first-phase alternating-current electrical power, second-phase alternating-current electrical power, and third-phase alternating-current electrical power. Each power unit includes a first-phase power module, a second-phase power module, and a third-phase power module. The first-phase power module is electrically connected between the first-phase alternating-current electrical power and the output end. The first-phase power module converts the first-phase alternating-current electrical power into the first direct-current electrical power. The second-phase power module is electrically connected between the second-phase alternating-current electrical power and the output end. The second-phase power module converts the second-phase alternating-current electrical power into the first direct-current electrical power. The third-phase power module is electrically connected between the third-phase alternating-current electrical power and the output end. The third-phase power module converts the third-phase alternating-current electrical power into the first direct-current electrical power

In an embodiment, each power unit includes a control module. The control module controls operating statuses of the first-phase power module, the second-phase power module, and the third-phase power module based on a voltage and a current of the first three-phase alternating-current electrical power, to control the first direct-current electrical power to be in a preset range. The control module can control operating statuses of the plurality of power modules based on requirements of the load. In this way, the first direct-current electrical power output by each power unit is in a required voltage range and a required current range, thereby ensuring correct driving and running of the load.

In an embodiment, each of the power modules includes a conversion input end, N cascaded power conversion modules, and a conversion output end. The conversion input end is configured to receive one phase of alternating-current electrical power. The conversion output end is electrically connected to the output end. Each of the N cascaded power conversion modules includes a first alternating-current input end, a second alternating-current input end, and two direct-current output ends. For an i^{th} level of power module, the first alternating-current input end is electrically connected to the second alternating-current input end of an (i-1)^{th} level of power module, where 1≤i≤N. The second alternating-current input end is electrically connected to the first alternating-current input end of an (i+1)^{th} level of power module. The two direct-current output ends are electrically connected to the conversion output end. An alternating-current input end of a first level of power module is electrically connected to any phase of alternating-current electrical power in the first three-phase alternating-current electrical power. The second alternating-current input end of an N^{th} level of power module is electrically connected to a common voltage end. A voltage difference between the first alternating-current input end and the second alternating-current input end is used as alternating-current electrical power input to the power conversion module. A voltage difference between the first alternating-current input end and the second alternating-current input end in each power conversion module is within a preset range. The power conversion module converts the voltage difference into a first direct-current voltage, and outputs the first direct-current voltage from the conversion output end. The N cascaded power conversion modules are connected in series to the input end of the conversion output end, and connected in parallel to the output end of the conversion output end. This accurately and effectively ensures hierarchical conversion for a relatively high alternating-current voltage, and also ensures a relatively high power of an output direct-current voltage.

In an embodiment, each of the power modules further includes a protection circuit, a pre-start circuit, a filter circuit, and a sampling circuit that are sequentially connected in series between the conversion input end and the N cascaded power conversion modules. The protection circuit is configured to: transmit the alternating-current electrical power received by the conversion input end to the filter circuit, and disconnect the conversion input end when the alternating-current electrical power exceeds a threshold current. The pre-start circuit is electrically connected to the protection circuit, and is configured to provide a start voltage less than a rated operating voltage of the power conversion module for the power conversion module before the power conversion module operates. The filter circuit is electrically connected to the pre-start circuit, and is configured to perform filtering processing on the alternating-current electrical power. The sampling circuit is electrically connected between the pre-start circuit and the N cascaded power conversion modules, and is configured to: collect the voltage and the current of the alternating-current electrical power that are obtained after filtering processing, and obtain the sampling voltage and the sampling current. The protection circuit, the pre-start circuit, the filter circuit, and the sampling circuit cooperate to ensure that the N cascaded power conversion modules can safely, accurately, and efficiently obtain the first direct-current voltage in a required range.

In an embodiment, the control module is electrically connected to the sampling circuit and the N cascaded power conversion modules in each power module. The control module obtains the sampling voltage and the sampling current, and controls operating statuses of the N cascaded power conversion modules based on the sampling voltage and the sampling current, so that both a current and a voltage of the first direct-current electrical power are in preset threshold ranges.

In an embodiment, each power module is disposed on one pluggable circuit base board, or the three power modules are disposed on one pluggable circuit base board. If the power conversion module in the power module is damaged and becomes ineffective, a circuit base board corresponding to the corresponding power module only needs to be removed and replaced with a power module that can operate normally. Therefore, installation and disassembly are easy, an assembly workload is greatly reduced, and a structure of the entire system is also simple. In this way, a fault point is easy to be found, and maintenance is easy. In addition, the power modules in the solid-state transformer are independent of each other, to ensure that the solid-state transformer has simple cabling and improve reliability and maintainability of the solid-state transformer.

In an embodiment, the solid-state transformer includes a system control module. The system control module includes at least one system control unit. The system control unit is electrically connected to the plurality of power units to control operating statuses of the plurality of power units. The operating statuses of the plurality of power units are controlled at the same time, so that the first direct-current electrical power output by the plurality of power units is in the required voltage range and the required current range, to adjust and control a power of the first direct-current electrical power output by a load of the solid-state transformer and better match the power with electrical power required by the load.

According to a second aspect, in an implementation of this application, a power supply system is provided, including the foregoing solid-state transformer and a medium-voltage alternating-current conversion module. The medium-voltage alternating-current conversion module is configured to convert mains high-voltage alternating-current electrical power into first three-phase alternating-current electrical power. An input end of the solid-state transformer is electrically connected to the medium-voltage alternating-current conversion module, and receives the first three-phase alternating-current electrical power. The output end is configured to: connect to a load, and provide a first direct-current voltage for the load.

In an embodiment, the solid-state transformer further includes an inverter converter. The inverter converter is electrically connected to a plurality of power units, and is configured to: receive the first direct-current voltage, convert the first direct-current voltage into inverter alternating-current electrical power, and output the inverter alternating-current electrical power to the load. The power supply system can ensure that the power supply system still continuously provides operating electrical power for the load even in a maintenance process, to ensure that the load is not powered off and in a normally operating state, thereby effectively improving running continuity and running stability of the load.

### BRIEF DESCRIPTION OF DRAWINGS

FIG. 1 is a function block diagram of a power supply system according to a first embodiment of this application;
FIG. 2 is a function block diagram of a solid-state transformer shown in FIG. 1;
FIG. 3 is a function block diagram of any power unit shown in FIG. 2;
FIG. 4 is a schematic diagram of a specific circuit structure of a power unit shown in FIG. 3;
FIG. 5 is a schematic diagram of a specific circuit structure of N cascaded power conversion modules shown in FIG. 3;
FIG. 6 is a schematic diagram of a circuit structure of a power conversion module shown in FIG. 5;
FIG. 7 is a function block diagram of a power supply system according to a second embodiment of this application; and
FIG. 8 is a function block diagram of any power unit in a solid-state transformer shown in FIG. 7.

### DESCRIPTION OF EMBODIMENTS

The following describes embodiments of the present invention with reference to the accompanying drawings.

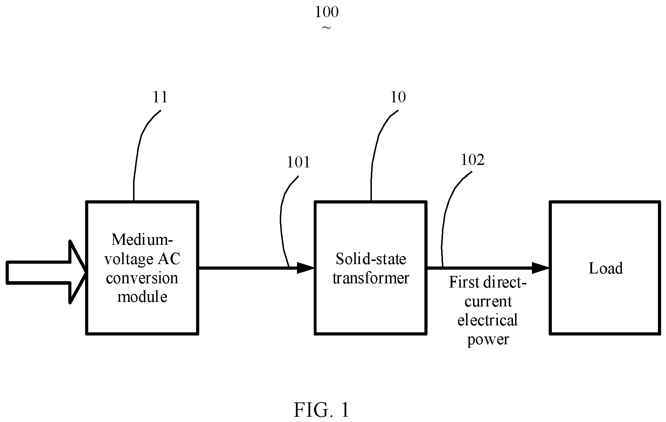

FIG. 1 is a function block diagram of a power supply system according to a first embodiment of this application.

As shown in FIG. 1, the power supply system 100 includes a solid-state transformer 10 and a medium-voltage alternating-current conversion module 11 that are electrically connected and that perform transmission of an electrical signal. The medium-voltage alternating-current conversion module 11 is configured to convert mains high-voltage alternating-current electrical power into first three-phase alternating-current electrical power. The solid-state transformer 10 receives the first three-phase alternating-current electrical power from the medium-voltage alternating-current conversion module 11, converts the first three-phase alternating-current electrical power into first direct-current electrical power, and provides the first direct-current electrical power to a load, to drive the load to operate.

In this embodiment, the mains high-voltage alternating-current electrical power may come from a power grid, or may come from an automatic electricity generator. The first three-phase alternating-current electrical power may be, for example, 10 kV three-phase alternating-current electrical power. The first three-phase alternating-current electrical power includes three phases of alternating-current electrical power with the same amplitude, the same frequency, and a phase difference of 120°. The three phases of alternating-current electrical power with the phase difference of 120° are first-phase alternating-current electrical power A (A-phase alternating-current electrical power), second-phase alternating-current electrical power B (B-phase alternating-current electrical power), and third-phase alternating-current electrical power C (C-phase alternating-current electrical power).

Specifically, the solid-state transformer 10 includes an input end 101 and an output end 102. The input end 101 is electrically connected to the medium-voltage alternating-current conversion module 11, and is configured to receive the first three-phase alternating-current electrical power from the medium-voltage alternating-current conversion module 11. The output end 102 is electrically connected to the load, and is configured to output a first direct-current voltage to the load. In this embodiment, the first direct-current electrical power may be a direct-current voltage of 200 V-400 V Certainly, the first direct-current electrical power may be adjusted according to an actual requirement. This is not limited thereto.

In another embodiment of this application, the first direct-current electrical power may further be converted into inverter alternating-current electrical power by using another disposed DC-AC inverter converter 17, to be used by an alternating-current driven circuit in the load.

In this embodiment, the load may be an IT device of a data center, for example, a display, a switch, and a router.

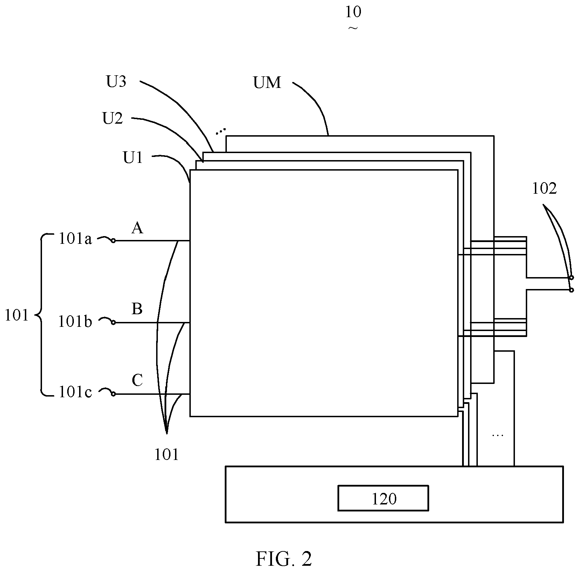

FIG. 2 is a function block diagram of a solid-state transformer shown in FIG. 1.

As shown in FIG. 2, the solid-state transformer 10 includes a plurality of power units U1-UM (unit) and a system control module 120. The plurality of power units (unit) are connected in parallel between the input end 101 and the output end 102. Each power unit Uj is configured to: convert the first three-phase alternating-current electrical power into the first direct-current electrical power, and output the first direct-current electrical power from the output end 102. Herein, M is a positive integer greater than 1, and j is a positive integer greater than or equal to 1 and less than or equal to M.

In correspondence with the three-phase alternating-current electrical power, the input end 101 includes a first-phase input end 101a, a second-phase input end 101b, and a third-phase input end 101c. In this embodiment, the first-phase input end 101a correspondingly receives the first-phase alternating-current electrical power A (A-phase alternating-current electrical power), the second-phase input end 101b correspondingly receives the second-phase alternating-current electrical power B (B-phase alternating-current electrical power), and the third-phase input end 101c correspondingly receives the third-phase alternating-current electrical power C (C-phase alternating-current electrical power).

Each power unit Uj is electrically connected to the first-phase input end 101a, the second-phase input end 101b, and the third-phase input end 101c, to receive the first-phase alternating-current electrical power A (A-phase alternating-current electrical power), the second-phase alternating-current electrical power B (B-phase alternating-current electrical power), and the third-phase alternating-current electrical power C (C-phase alternating-current electrical power).

Because the power units U1-UM are connected in parallel, if any one of the plurality of power units Uj is damaged and needs to be repaired, the damaged power unit Uj is directly repaired or replaced in a power-off manner, and another power unit U that is not damaged to become ineffective can still operate normally. In other words, the output end 102 of the solid-state transformer 10 can continuously and normally output the first direct-current electrical power to the load, to ensure that the load is not powered off and in a normally operating state even in a maintenance process of the power units U1-UM, thereby effectively improving running continuity and running stability of the load.

The system control module 120 has at least one system control unit 121. The system control unit 121 is electrically connected to the plurality of power units U1-UM, to control an operating status of a power unit U. In this embodiment, when the power supply system 100 includes a plurality of solid-state transformers 100, the system control units 121 with the same quantity as the solid-state transformers 100 may be disposed. In a one-to-one correspondence manner, one system control unit 121 correspondingly controls an operating status of one solid-state transformer 100.

In this embodiment, controlling the operating status of the solid-state transformer 100 includes: The system control unit 121 may adjust, based on an instruction input by a user or a specific running status of the load, an output power of direct-current electrical power output by each power unit U in the operating status. The operating status of the power unit U may further include a response speed, a magnitude of a current and a magnitude of a voltage of the first direct-current electrical power, and the like.

In this embodiment of this application, the system control module 120 may be a single circuit base board disposed on a backboard of a cabinet of the solid-state transformer 100, and may further include a display module for displaying the specific operating status of each power unit, a pluggable interface for implementing data transmission and connection, an auxiliary operating power supply, and the like.

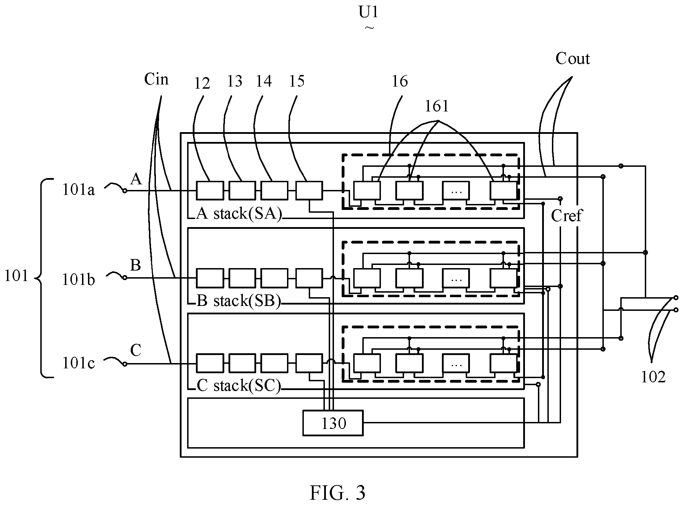

Specifically, FIG. 3 is a function block diagram of any power unit Uj shown in FIG. 2. In this embodiment, the power units have the same circuit structure. The circuit structure of the power unit is specifically described by using the power unit U1 as an example.

As shown in FIG. 3, the power unit U1 includes three power modules and a control module 130. The three power modules are specifically a first-phase power module SA (A stack), a second-phase power module SB (B stack), and a third-phase power module SC (C stack).

In a one-to-one correspondence manner, one power module U is electrically connected between one phase of alternating-current electrical power and the output end 102. Each power module U is separately configured to convert alternating-current electrical power electrically connected to the power module U into the first direct-current electrical power. Therefore, the three power modules separately cooperate with each other to convert the first three-phase alternating-current electrical power into the first direct-current electrical power with a preset power

Specifically, the first-phase power module SA is electrically connected between the first-phase alternating-current electrical power A (A-phase alternating-current electrical power) and the output end 101, and the first-phase power module SA converts the first-phase alternating-current electrical power A (A-phase alternating-current electrical power) into the first direct-current electrical power.

The second-phase power module SB is electrically connected between the second-phase alternating-current electrical power B (B-phase alternating-current electrical power) and the output end 101, and the second-phase power module SB converts the second-phase alternating-current electrical power B (B-phase alternating-current electrical power) into the first direct-current electrical power.

The third-phase power module SC is electrically connected between the third-phase alternating-current electrical power C (C-phase alternating-current electrical power) and the output end 101, and the third-phase power module SC converts the third-phase alternating-current electrical power C (C-phase alternating-current electrical power) into the first direct-current electrical power

In this embodiment, the first-phase power module SA (A stack), the second-phase power module SB (B stack), and the third-phase power module SC (C stack) have the same circuit structure and the same operating principle. For ease of description, the circuit structure of the power module is specifically described by using any phase power module as an example.

In the power unit U1, the first-phase power module SA (A stack) is used as an example to specifically describe circuit structures of the three power modules. Specifically, the first-phase power module SA is connected to the input end 101 by using a conversion input end Cin, and is connected to the output end 102 by using a conversion output end Cout. The first-phase power module SA (A stack) receives the first-phase alternating-current electrical power (A-phase alternating-current electrical power) from the conversion input end Cin, converts the first-phase alternating-current electrical power (A-phase alternating-current electrical power) into the first direct-current electrical power, and transmits the first direct-current electrical power to the output end 102 from the conversion output end Cout.

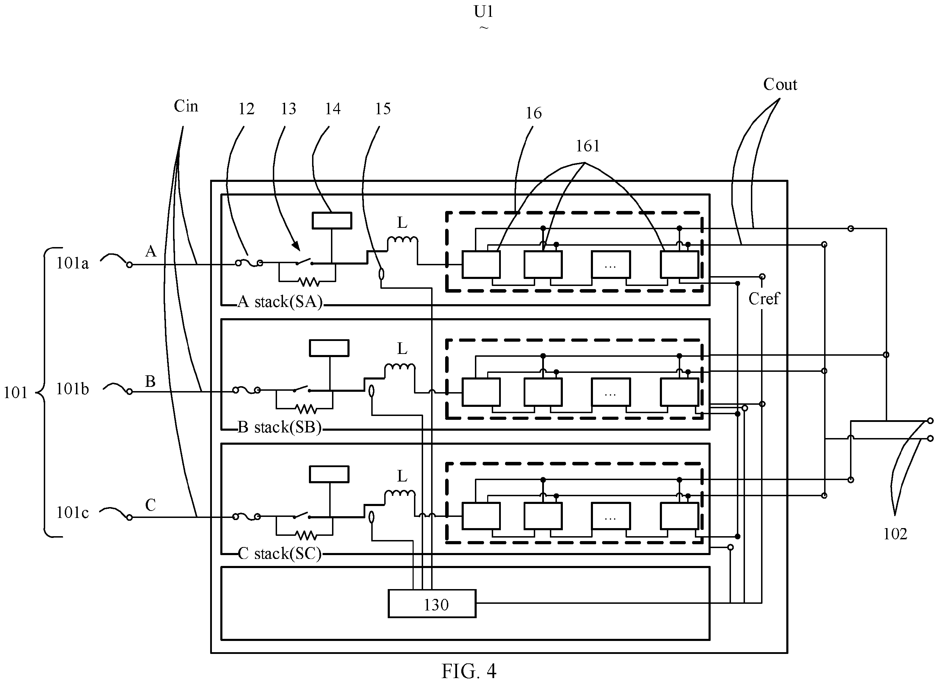

Further, FIG. 4 is a schematic diagram of a specific circuit structure of the power unit U1 shown in FIG. 3. As shown in FIG. 4, the first-phase power module SA further includes a protection circuit 12, a pre-start circuit 13, a filter circuit 14, a sampling circuit 15, an inductor L, and N cascaded power conversion modules 16 that are connected in series between the conversion input end Cin and the conversion output end Cout.

The protection circuit 12 is configured to: transmit alternating-current electrical power received from the conversion input end Cin to the pre-start circuit 13, and disconnect the conversion input end Cin when a current of the alternating-current electrical power exceeds a threshold current, to prevent overvoltage or overcurrent alternating-current electrical power from pouring into the pre-start circuit 13, the filter circuit 14, the sampling circuit 15, the inductor L, and the N cascaded power conversion modules 16, thereby causing damage and ineffectiveness of an electronic component in the foregoing circuit. In this embodiment, the protection circuit 12 is a fuse.

The pre-start circuit 13 is electrically connected to the protection circuit 12, and is configured to: before the N cascaded power conversion modules 16 operate, provide a start voltage less than a rated operating voltage of the power conversion module for the N cascaded power conversion modules 16. In this embodiment, the pre-start circuit 13 is also a soft start circuit. Before the N cascaded power conversion modules 16 operate, a start voltage less than a rated voltage of the N cascaded power conversion modules 16 is provided in advance for the N cascaded power conversion modules 16. The following case is avoided: An alternating-current voltage with a relatively large voltage value is loaded to the N cascaded power conversion modules 16 in a short time, and an electronic component in the N cascaded power conversion modules 16 cannot withstand a voltage shock and is damaged. In other words, a buffer voltage is provided for the N cascaded power conversion modules 16 in advance, to reduce a surge voltage of a relatively large voltage difference that the electronic component in the N cascaded power conversion modules 16 withstands in a short time.

After the pre-start circuit 13 starts for preset duration, the pre-start circuit 13 further provides the alternating-current electrical power in the first-phase alternating-current electrical power A for the N cascaded power conversion modules 16, to complete soft start of the first-phase power module SA.

In this embodiment, the pre-start circuit 13 implements soft start by using a switch (not shown) and a resistor (not shown) connected in parallel between the protection circuit 12 and the filter circuit 14. Before the N cascaded power conversion modules 16 operate, the switch is in an off (off) state. A voltage and a current of the first-phase alternating-current electrical power A are provided for the following filter circuit 14, the sampling circuit 15, the inductor L, and the N cascaded power conversion modules 16 through current limitation and voltage division of a resistor. In other words, a start voltage less than the rated operating voltage of the power conversion module is provided for the N cascaded power conversion modules 16 through current limitation and voltage division of a resistor. After the N cascaded power conversion modules 16 officially operate, the switch is in an on (on) state, and the resistor is short circuited by the switch. A voltage and a current of the first-phase alternating-current electrical power A are directly provided for the following filter circuit 14, the sampling circuit 15, the inductor L, and the N cascaded power conversion modules 16, to ensure that the N cascaded power conversion modules 16 normally operate.

The filter circuit 14 is electrically connected to the pre-start circuit 13, and is configured to perform filtering processing on the alternating-current electrical power. In this embodiment, the filter circuit 14 mainly loads a preset harmonic to the alternating-current electrical power, to filter a voltage component and a current component on a non-operating frequency band in the voltage and the current of the alternating-current electrical power, thereby ensuring operating efficiency and operating accuracy when voltage conversion is performed on the alternating-current electrical power

The sampling circuit 15 is electrically connected between the filter circuit 14 and the N cascaded power conversion modules 16, and is configured to: collect the voltage and the current of the alternating-current electrical power after filtering processing, and obtain a sampling voltage and a used voltage. In this embodiment, the sampling circuit 15 may implement detection and collection of the current and the voltage by using a Hall component.

The inductor L is electrically connected between the filter circuit 14 and the N cascaded power conversion modules 16. The inductor L implements alternating-current voltage to direct-current voltage conversion in cooperation with the N cascaded power conversion modules 16 through storing electric energy and releasing electric energy.

The control module 130 is electrically connected to the sampling circuit 15 and the N cascaded power conversion modules 16 in each power module. The control module 130 obtains the sampling voltage and the sampling current, and controls operating statuses of the N cascaded power conversion modules 16 based on the sampling voltage and the sampling current, so that both a current and a voltage of the first direct-current electrical power are in preset ranges. In this embodiment, the preset range may be a rated fluctuation range set based on the current and the voltage of the first direct-current electrical power required by the current load.

In this embodiment, the control module 130 and the N cascaded power conversion modules 16 may perform data communication by using an optical fiber. In addition, it should be noted that, each (as shown in FIG. 4) of the N cascaded power conversion modules 16 includes a controller that controls the power conversion module to perform voltage conversion. Therefore, the control module 130 transmits a control signal to a controller in each power conversion module, so that the controller controls voltage conversion of the power conversion module based on the control signal. In this way, the control module 130 controls the operating status of each power module.

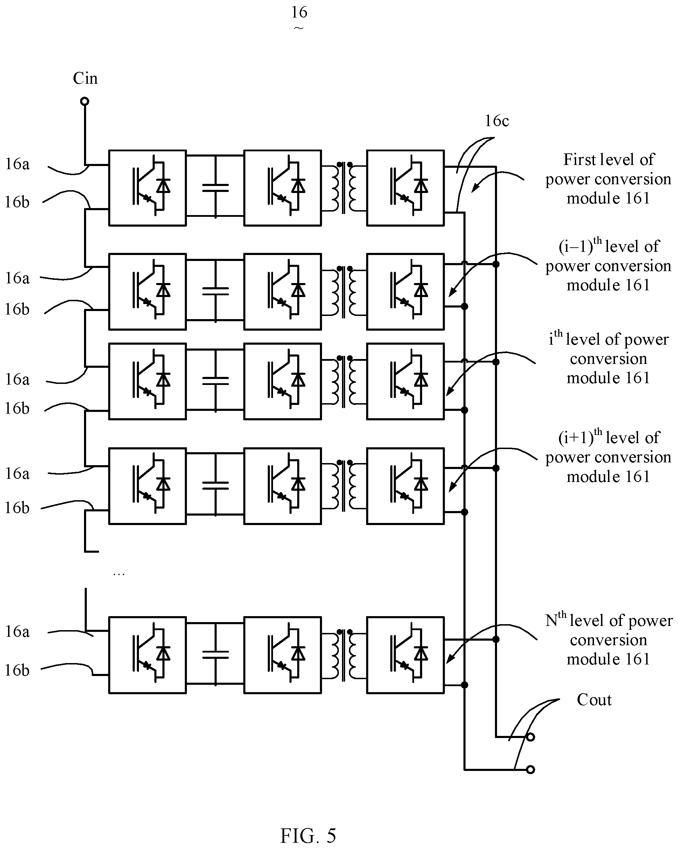

With reference to FIG. 3 and FIG. 5, FIG. 5 is a schematic diagram of a specific circuit structure of the N cascaded power conversion modules 16 shown in FIG. 3.

As shown in FIG. 3 and FIG. 5, the N cascaded power conversion modules (cell) 16 include N sequentially cascaded power conversion modules 161. In this embodiment, the N power conversion modules 161 are connected in series on an alternating-current input side, and are connected in parallel on a direct-current output side.

Specifically, each power conversion module 161 includes a first alternating-current input end 16a, a second alternating-current input end 16b, and two direct-current output ends 16c. For an i^{th} level of power module 161, the first alternating-current input end 16a is electrically connected to the second alternating-current input end 16b of an (i-1)^{th} level of power module, and the second alternating-current input end 16b is electrically connected to the first alternating-current input end 16a of an (i+1)^{th} level of power module, where 1≤i≤N. The two direct-current output ends 16c are electrically connected to the conversion output end Cout.

The alternating-current input end 16a of a first level of power module 161 is electrically connected to the conversion input end Cin, to receive the first-phase alternating-current electrical power A in the first three-phase alternating-current electrical power. The second alternating-current input end 16b of an N^{th} level of power module is electrically connected to a common voltage end (Cref).

It may be understood that the second alternating-current input ends 16b of the N^{th} levels of power modules in the first-phase power module SA (A stack), the second-phase power module SB (B stack), and the third-phase power module SC (C stack) are all electrically connected to the common voltage end (Cref). In other words, the second alternating-current input ends 16b of the N^{th} levels of power modules in the three power modules are electrically connected to the same common voltage end Cref.

In this embodiment, for each of the N sequentially cascaded power conversion modules 161, a voltage difference between the first alternating-current input end 16a and the second alternating-current input end 16b is used as alternating-current electrical power input to the power conversion module 161. A voltage difference between the first alternating-current input end 16a and the second alternating-current input end 16b in each power conversion module 161 is in a preset range. The power conversion module 161 uses the voltage difference as alternating-current electrical power, converts the alternating-current electrical power to the first direct-current voltage, and outputs the first direct-current voltage from the output end Cout. In this embodiment, voltage differences between the first alternating-current input ends 16a and the second alternating-current input ends 16b of the power conversion modules 161 are basically the same. The preset range is a voltage floating range set according to an actual requirement. The floating range may correspond to a rated voltage fluctuation range of the first direct-current voltage output by the solid-state transformer 10. For example, the floating range is 0 V-5 V

For example, a voltage of the first-phase alternating-current electrical power A is 10 kV, and the first-phase power module SA includes 10 cascaded power conversion modules 161, that is, N is 10. Because the power conversion modules 161 have the same circuit structure, a voltage difference between each first alternating-current input end 16a and the second alternating-current input end 16b of each of the ten cascaded power conversion modules 161 is (10 kV-V_{L})/10 kV, where V_{L} is a divided voltage of the inductor L.

Because the power units U1-UM are connected in parallel, the output power of the solid-state transformer 10 is a sum of output powers of the power units U1-UM. For example, if the output power of the solid-state transformer 10 is 20 kW, the output power of each power unit U is 20 kW/N. It can be learned that the output power required for each power unit U can be effectively reduced. In this case, the switch component of the power conversion module 161 in the power unit U does not need to use a semiconductor silicon (Si) component with high voltage withstand performance and an expensive price, thereby effectively reducing the costs of the solid-state transformer 10. In addition, a relatively small voltage stress (dv/dt) and a relatively small current stress (di/dt) are output by the power unit U. This helps an insulation design of the solid-state transformer 10. In addition, because the output power of each power unit U is relatively small, a system loss is relatively small, which facilitates a design of a heat dissipation system and helps reduce heat dissipation costs.

If any power unit Uj is damaged and needs to be repaired, the damaged power unit Uj is directly repaired or replaced in a power-off manner, and another power unit U that is not damaged to become ineffective can still operate normally. In other words, it can be still ensured that the output end 102 of the solid-state transformer 10 can normally output the first direct-current electrical power to the load, to ensure that the load is not powered off even in a maintenance process of the power units U1-UM, thereby effectively improving running continuity and running stability of the load.

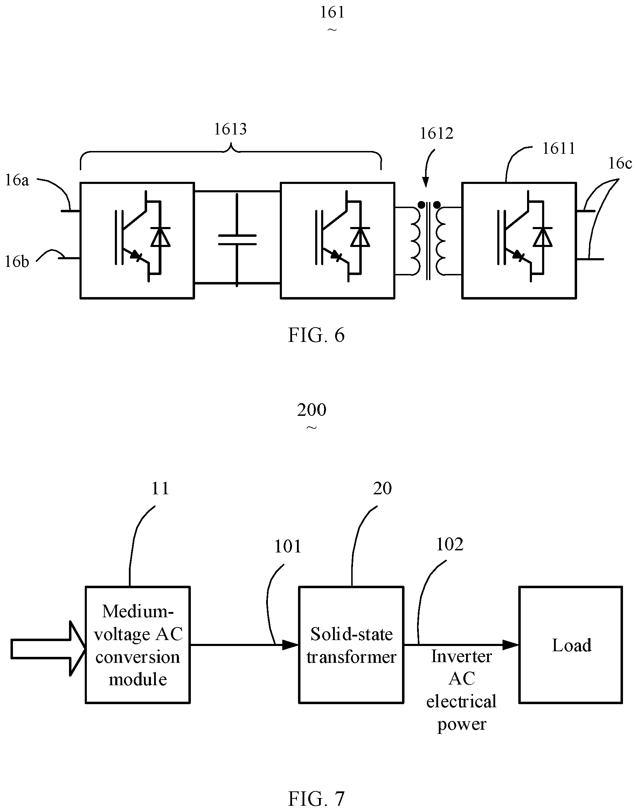

FIG. 6 is a schematic diagram of a circuit structure of a power conversion module shown in FIG. 5.

As shown in FIG. 6, the power conversion module 161 includes a low-voltage module 1611, a high-frequency isolation transformer 1612, and a high-voltage module 1613 that are sequentially electrically connected. The high-voltage module 1613 is correspondingly connected to alternating-current electrical power. The high-frequency isolation transformer 1612 cooperates with the high-voltage module 1613 to perform voltage conversion on the indicated alternating-current electrical power, and then outputs the first direct-current voltage by using the low-voltage module 1611.

Specifically, a high-voltage conversion input end (not shown) of the high-voltage module 1613 is electrically connected to the first alternating-current input end 16a and the second alternating-current input end 16b, and a high-voltage conversion output end (not shown) of the high-voltage module 1613 is connected to a variable-voltage input end (not shown) of the high-voltage isolation transformer 1612.

A variable-voltage output end (not shown) of the high-frequency isolation transformer 1612 is electrically connected to a low-voltage conversion input end (not shown) of the low-voltage module 1611. In this embodiment, an operating frequency of the high-voltage isolation transformer 1612 is far higher than (≥10 times) a frequency of a power grid.

The low-voltage conversion input end (not shown) of the low-voltage module 1611 is connected to the variable-voltage output end (not shown) of the high-frequency isolation transformer 1612. The low-voltage conversion output end (not shown) of the low-voltage module 1611 is connected to the two direct-current output ends 16c.

In this embodiment, both the low-voltage module 1611 and the high-voltage module 1613 are manufactured by using a switch component with low voltage withstand performance. Withstanding voltages of the low-voltage module 1611 and the high-voltage module 1613 are greater than 3.3 kV.

In this embodiment, as shown in FIG. 3 and FIG. 5, each of the three power modules SA-SC is separately disposed on a pluggable circuit base board. If one power conversion module 161 shown in FIG. 5 and FIG. 6 is damaged and becomes ineffective, a circuit base board corresponding to a corresponding power module only needs to be pulled out and replaced with a power module that can operate normally. Therefore, installation and disassembly are easy, an assembly workload is greatly reduced, and a structure of the entire system is also simple. In this way, a fault point is easy to be found, and maintenance is easy. In addition, the power modules in the solid-state transformer 10 are independent of each other, to ensure that the solid-state transformer 10 has simple cabling and correspondingly improve reliability and maintainability of the solid-state transformer.

In another embodiment of this application, the three power modules SA-SC may be all disposed on a pluggable circuit base board, so that the power unit can be easily installed and disassembled. Therefore, an assembly workload is greatly reduced. An entire structure of the solid-state transformer 10 is relatively simple and has relatively low costs.

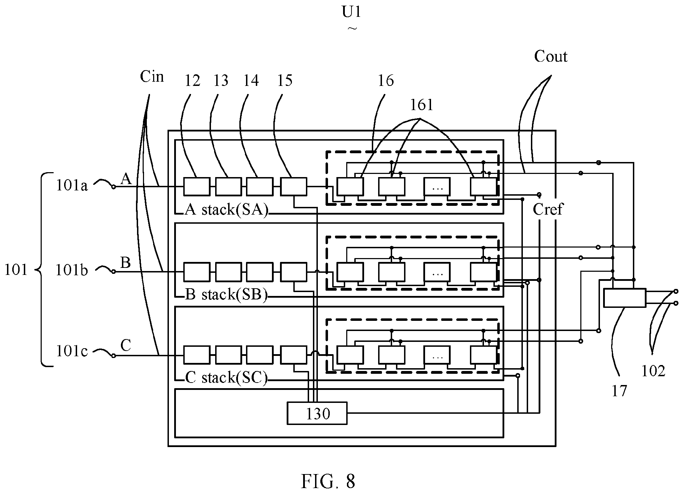

FIG. 7 is a function block diagram of a power supply system according to a second embodiment of this application. In this embodiment, a power supply system 200 and the power supply system 100 shown in FIG. 1 have basically the same circuit structure. A difference is that the solid-state transformer 20 converts first direct-current electrical power into inverter alternating-current electrical power by using a disposed DC-AC inverter converter (FIG. 8), to be used by an alternating-current driven circuit in a load.

Specifically, FIG. 8 is a function block diagram of any power unit Uj in the solid-state transformer shown in FIG. 7. In this embodiment, the power unit Uj in the solid-state transformer 20 shown in FIG. 8 and the power unit U1 shown in FIG. 3 have basically the same circuit structure and the same operating principle. A difference is that the solid-state transformer 20 further includes an inverter converter 17. The inverter converter 17 is electrically connected to a conversion output end Cout of the first-phase power module SA, the second power module SB, and the third power module SC. The inverter converter 17 converts a first direct-current voltage received from the conversion output end Cout into inverted alternating-current electrical power through DC-AC inversion. The inverted alternating-current electrical power is output to the load, to be used by an alternating-current driven circuit in the load.

The technical solutions provided in this application are described in detail above. The principle and implementation of this application are described herein through specific examples. The description about embodiments is merely provided to help understand the method and core ideas of this application. In addition, persons of ordinary skill in the art can make variations and modifications to this application in terms of the specific implementations and application scopes according to the ideas of this application. Therefore, the content of specification shall not be construed as a limit to this application.

## Claims

1. A solid-state transformer, comprising an input end, a plurality of power units, and an output end, wherein
the input end is configured to input first three-phase alternating-current electrical power; and
the plurality of power units are connected in parallel to the input end and the output end, and each power unit is configured to convert the first three-phase alternating-current electrical power into first direct-current electrical power, and output the first direct-current electrical power from the output end.

2. The solid-state transformer according to claim 1, wherein
the first three-phase alternating-current electrical power comprises three phases of alternating-current electrical power with a phase difference of 120°; and
each power unit comprises three power modules, wherein one power module is electrically connected between one phase of alternating-current electrical power and the output end, and the power module is separately configured to convert the received alternating-current electrical power into the first direct-current electrical power

3. The solid-state transformer according to claim 2, wherein
the three phases of alternating-current electrical power with the phase difference of 120° are first-phase alternating-current electrical power, second-phase alternating-current electrical power, and third-phase alternating-current electrical power;
each power unit comprises a first-phase power module, a second-phase power module, and a third-phase power module;
the first-phase power module is electrically connected between the first-phase alternating-current electrical power and the output end, and the first-phase power module converts the first-phase alternating-current electrical power into the first direct-current electrical power;
the second-phase power module is electrically connected between the second-phase alternating-current electrical power and the output end, and the second-phase power module converts the second-phase alternating-current electrical power into the first direct-current electrical power; and
the third-phase power module is electrically connected between the third-phase alternating-current electrical power and the output end, and the third-phase power module converts the third-phase alternating-current electrical power into the first direct-current electrical power

4. The solid-state transformer according to any one of claims 1 to 3, wherein each power unit comprises a control module, the control module controls operating statuses of the first-phase power module, the second-phase power module, and the third-phase power module based on a voltage and a current of the first three-phase alternating-current electrical power, to control the first direct-current electrical power to be in a preset range.

5. The solid-state transformer according to any one of claims 1 to 4, wherein each power module comprises a conversion input end, N cascaded power conversion modules, and a conversion output end, wherein
the conversion input end is configured to receive one phase of alternating-current electrical power, and the conversion output end is electrically connected to the output end;
each of the N cascaded power conversion modules comprises a first alternating-current input end, a second alternating-current input end, and two direct-current output ends;
for an i^{th} level of power module, wherein 1≤i≤N,
the first alternating-current input end is electrically connected to a second alternating-current input end of an (i-1)^{th} level of power module;
the second alternating-current input end is electrically connected to a first alternating-current input end of an (i+1)^{th} level of power module;
the two direct current output ends are electrically connected to the conversion output end;
an alternating-current input end of a first level of power module is electrically connected to any alternating-current electrical power in the first three-phase alternating-current electrical power, and a second alternating-current input end of an N^{th} level of power module is electrically connected to a common voltage end;
a voltage difference between the first alternating-current input end and the second alternating-current input end is used as alternating-current electrical power input to the power conversion module, and a voltage difference between the first alternating-current input end and the second alternating current input end in each power conversion module is within a preset range; and
the power conversion module converts the voltage difference into a first direct current voltage, and outputs the first direct current voltage from the conversion output end.

6. The solid-state transformer according to any one of claims 1 to 5, wherein each of the power modules further comprises a protection circuit, a pre-start circuit, a filter circuit, and a sampling circuit that are sequentially connected in series between the conversion input end and the N cascaded power conversion modules, wherein
the protection circuit is configured to transmit the alternating-current electrical power received by the conversion input end to the filter circuit, and disconnect the conversion input end when the alternating-current electrical power exceeds a threshold current;
the pre-start circuit is electrically connected to the protection circuit, and is configured to: before the power conversion module operates, provide a start voltage less than a rated operating voltage of the power conversion module for the power conversion module;
the filter circuit is electrically connected to the pre-start circuit, and is configured to perform filtering processing on the alternating-current electrical power; and
the sampling circuit is electrically connected between the pre-start circuit and the N cascaded power conversion modules, and is configured to: collect the voltage and the current of the alternating-current electrical power after filtering processing, and obtain a sampling voltage and a sampling current.

7. The solid-state transformer according to claim 6, wherein
the control module is electrically connected to a sampling circuit in each power module and the N cascaded power conversion modules; and
the control module obtains the sampling voltage and the sampling current, and controls operating statuses of the N cascaded power conversion modules based on the sampling voltage and the sampling current.

8. The solid-state transformer according to any one of claims 2 to 7, wherein
each power module is disposed on a pluggable circuit base board.

9. The solid-state transformer according to any one of claims 2 to 7, wherein
the three power module is disposed on a pluggable circuit base board.

10. The solid-state transformer according to any one of claims 1 to 9, wherein the solid-state transformer comprises a system control module, the system control module comprises at least one system control unit, and the system control unit is electrically connected to the plurality of power units to control operating statuses of the plurality of power units.

11. A power supply system, comprising the solid-state transformer and the medium-voltage alternating-current conversion module according to any one of claims 1 to 10, wherein
the medium-voltage alternating-current conversion module is configured to convert a mains high-voltage alternating-current electrical power into the first three-phase alternating-current electrical power; and
an input end of the solid-state transformer is electrically connected to the medium-voltage alternating-current conversion module, and receives the first three-phase alternating-current electrical power, and the output end is configured to: connect to a load, and provide a first direct-current voltage for the load.

12. The power supply system according to claim 11, wherein the solid-state transformer further comprises an inverter converter, and the inverter converter is electrically connected to a plurality of power units, and is configured to: receive the first direct-current voltage, convert the first direct-current voltage into inverter alternating-current electrical power, and output the inverter alternating-current electrical power to the load.
